# EUROPEAN PATENT SPECIFICATION

(11) **EP 2 563 576 B1**
(45) Date of publication and mention of the grant of the patent: **30.07.2014**
(21) Application number: 11727515.6
(22) Date of filing: 26.04.2011
(51) Int. Cl.: B29D 30/14, B29D 30/28

(54) **METHOD AND APPARATUS FOR PRODUCING TYRE COMPONENTS.**
VERFAHREN UND VORRICHTUNG ZUR HERSTELLUNG VON REIFENKOMPONENTEN
PROCÉDÉ ET MACHINE DE PRODUCTION D'UN ÉLÉMENT DE PNEU

(30) Priority: 26.04.2010 IT TO20100348
(43) Date of publication of application: 06.03.2013
(73) Proprietor: Marangoni Meccanica S.P.A., 38068 Rovereto (IT)
(72) Inventor: SALAORNI, Edoardo, I-38060 Isera (IT); CONT, Manuel, I-38068 Rovereto (IT)
(74) Representative: Giannini, Manuela
(86) International application number: PCT/IB2011/000899
(87) International publication number: WO 2011/135434

(56) References cited:
- EP-A1- 1 754 592
- EP-A2- 1 775 111
- WO-A1-2007/000443
- DE-A1- 1 579 161
- JP-A- 59 188 427
- US-A- 5 395 475
- US-A- 5 693 176
- US-A1- 2006 048 884
- US-B2- 7 641 752

## Description

### TECHNICAL FIELD

The present invention relates to a tyre component part production method and machine.

### BACKGROUND ART

In the rubber industry, a tyre component part is made by gradually depositing a strip of green elastomeric material onto a rotary toroidal support, which may be a rigid core or a toroidal carcass of a tyre being built or retread.

The strip may be prefabricated or, as is more often the case, produced and applied by a profiling unit, which forms part of a machine comprising a spindle for rotating the toroidal support about its axis, and comprises a forming unit, in which the strip, formed directly by an extruder or shaped later by a calender, is fed to an applicator, normally a roller, which forms the tyre component part by applying the strip to a given surface of the rotary toroidal support until the surface is completely covered.

The forming operation is normally performed as described, for example, in US-5395475, US-7641752 and WO-2007/000443, by moving the applicator so that the point of application of the strip to the surface for covering moves, on the surface for covering, along a trajectory - hereinafter referred to as 'application trajectory' - defined by the intersection of the surface for covering and a plane - hereinafter referred to as 'reference plane' - which is always necessarily a radial plane, i.e. any one of the infinite number of planes in the sheaf of planes through the rotation axis of the surface for covering, which axis coincides with the axis of the rotary support.

During or after the forming operation, a stitching operation is performed to eliminate any air pockets trapped in the component part formed or being formed, and also, if the support is part of a tyre being built, to ensure perfect adhesion of the strip to the underlying material.

Like the forming operation, the stitching operation is also usually performed by moving a pressure roller of a stitching unit along the surface for stitching, so that the point of contact between the pressure roller and the surface to be stitched moves, on the surface to be stitched, along a trajectory - hereinafter referred to as 'rolling trajectory' - defined by the intersection of the surface to be stitched and a plane - hereinafter referred to as 'reference plane - which, in the known art, e.g. EP-1775111, US2006/048884, DE-1579161, EP-1754592, US-5693176 and JP-59188427, is always a radial plane as defined above.

In other words, known stitching units are all designed so that, during the stitching operation, the point of contact of the moving pressure roller is maintained substantially in a 'reference plane' selected from the infinite number of radial reference planes available.

This method is justified on the grounds that, if the support mounted on the spindle is rotated about its axis, the speed vector applied to each point along any 'stitching trajectory' of the type defined above extends perpendicularly to the 'stitching trajectory', so the pressure roller, whose point of contact with the surface to be stitched moves along the selected 'stitching trajectory' and in the relative radial 'reference plane', rolls without sliding or skidding at any point along the selected 'stitching trajectory'.

Forming and stitching as described above pose no problems when the forming and stitching trajectories are straight (forming and stitching cylindrical surfaces), and/or forming and stitching are performed at different times (stitching after forming), and/or the forming and stitching units are completely independent, as in EP-1754592.

Conversely, problems still unsolved are posed when:
- the forming and stitching trajectories each comprise at least one portion crosswise to the rotation axis of the support (as, for example, when forming a shoulder and sidewall on a toroidal carcass);
- it is absolutely essential that the strip be stitched as it is deposited on the support; and
- the sidewall is extra-large with respect to the support radius.

Such is the case, for example, when producing shoulders and sidewalls of large-sized tyres, e.g. for farm vehicles or heavy-duty earthmoving machines. In which case, the height of the sidewall may be 70-80% of the support radius, and the size and weight of the strip normally demand practically immediate stitching.

In other words, in such cases, the stitching unit must follow closely behind the forming unit throughout the forming operation, and both units must move in unison along the respective trajectories.

In connection with the above, the major problem is not so much devising mechanical devices capable of moving the forming and stitching units simultaneously along their respective trajectories, as the fact that :
- if the height of the portion of the surface for covering crosswise to the radius equals a relatively high percentage of the support radius, and
- forming and stitching are performed using the above known method, i.e. moving the units themselves along respective radial reference planes,
interference between the forming and stitching units, close to the inner periphery of the sidewall, becomes inevitable, thus making it practically impossible to stitch newly applied strips at that point correctly.

### DISCLOSURE OF INVENTION

It is an object of the present invention to provide a method and machine for producing a tyre component part by gradual deposition of a strip, and designed to eliminate any interference between the forming and stitching units when covering and stitching a surface comprising at least one portion extending crosswise to the rotation axis of the support.

According to the present invention, there is provided a tyre component part production method as claimed in Claim 1 and preferably in any one of the following Claims depending directly or indirectly on Claim 1.

According to the present invention, there is also provided a tyre component part production machine as claimed in Claim 4 and preferably in any one of the following Claims depending directly or indirectly on Claim 4.

### BRIEF DESCRIPTION OF THE DRAWINGS

A non-limiting embodiment of the present invention will be described by way of example with reference to the accompanying drawings, in which :
Figure 1 shows a schematic view in perspective, with parts removed for clarity, of a tyre forming and stitching stage in accordance with the known art;
Figure 2 shows a schematic view in perspective, with parts removed for clarity, of a tyre forming and stitching stage in accordance with the teachings of the present invention;
Figure 3 shows a view in perspective of a preferred embodiment of the machine according to the present invention;
Figure 4 shows a side view of the Figure 3 machine;
Figure 5 shows a front view of the Figure 3 machine;
Figure 6 shows the same view as in Figure 5, of an operating configuration of part of the Figure 3 machine.

### BEST MODE FOR CARRYING OUT THE INVENTION

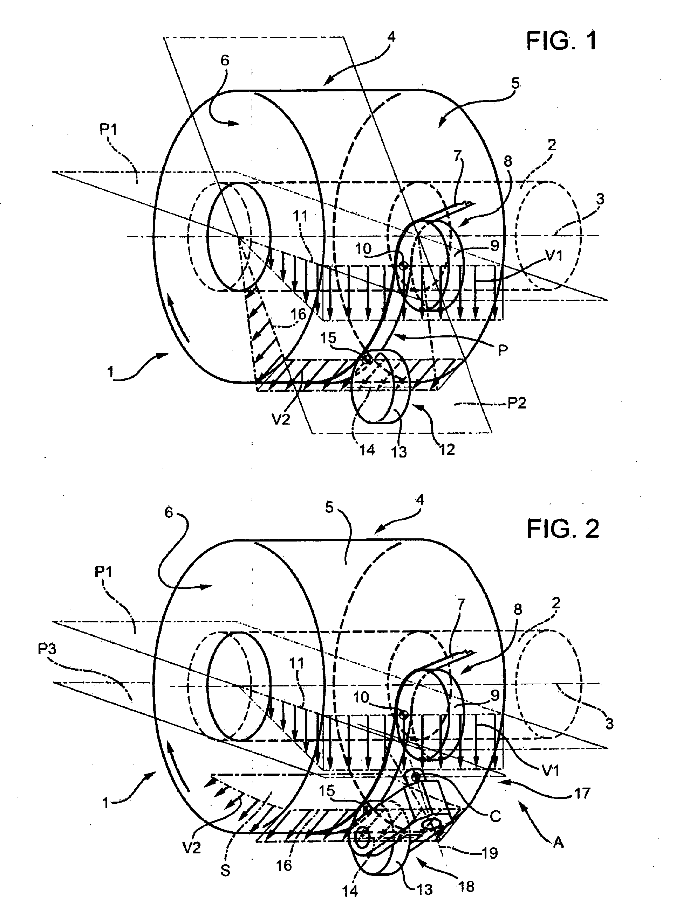

Number 1 in Figure 1, relative to the known art, indicates a toroidal support - in this case, a tyre carcass - mounted on a spindle 2 to rotate about an axis 3, and which has a toroidal surface 4 for covering comprising a cylindrical lateral portion 5 coaxial with axis 3, and two annular end portions 6, each extending crosswise to axis 3. Surface 4 is to be covered with a tyre component part (not shown) which, in the example shown, is formed gradually by rotating support 1 about axis 3 and simultaneously depositing a strip 7 of green elastomeric material onto surface 4.

In the example shown, strip 7 is deposited onto surface 4 by a forming unit 8 and along a path P, which extends along a cylindrical coil at cylindrical lateral portion 5, and along a spiral at each of annular end portions 6. Forming unit 8 comprises an applicator roller 9 positioned contacting surface 4 at an application point 10 which, during the forming operation, moves along an application trajectory 11 crosswise to path P. Application trajectory 11 is normally U-shaped, and is defined by the intersection of surface 4 and a radial plane P1, i.e. one of the infinite number of planes in the sheaf through axis 3. Plane P1 may be tilted at any angle, which normally depends on the size of the other devices (not shown) around spindle 2.

Plane P1 being radial, the speed vector V1 applied at each instant to each point along application trajectory 11 differs from one point to another, and is perpendicular to application trajectory 11 and plane P1, so strip 7 does not slip laterally on surface 4 at application point 10.

In the known art shown in Figure 1, spindle 2 and forming unit 8 are associated with a known stitching unit 12, which is independent of forming unit 8 and comprises, in known manner, a pressure roller 13 mounted to rotate about an axis 14 and movable in known manner to and from surface 4 to contact surface 4 at a point 15 directly downstream from application point 10 along path P. During the stitching operation, pressure roller 13 sweeps surface 4 along a stitching trajectory 16, which is normally U-shaped and, like application trajectory 11, to prevent pressure roller 13 from sliding on surface 4, is defined by the intersection of surface 4 and a radial plane P2 different from plane P1 and containing axis 3. The speed vector V2 applied at each instant to each point along stitching trajectory 16 differs from one point to another, and is perpendicular to stitching trajectory 16 and plane P2. Because planes P1 and P2 intersect along axis 3, interference between applicator roller 9 and pressure roller 13 or, at any rate, between the supporting and actuating devices (not shown) of the two rollers is always possible and even inevitable when annular portions 6 extend close to axis 3.

This is prevented, on the other hand, using the solution shown schematically in Figure 2 and relative to a machine A in accordance with the teachings of the present invention, and comprising a spindle 2 associated with a profiling unit 17 comprising forming unit 8 and a different stitching unit 18. In this case, plane P1, if any, is still radial - in the example shown, but not necessarily, a horizontal plane; and plane P2 is replaced by a curved surface S, which intersects surface 4, is generally parallel to plane P1, is located a given mean distance from plane P1, and does not contain axis 3.

In this case, the speed vectors V2 applied to points along stitching trajectory 16 are not all perpendicular to stitching trajectory 16, but tilt at increasing angles as they get closer to axis 3. So, to ensure slipfree stitching, pressure roller 13 is allowed to oscillate about an axis 19, which is crosswise to axis 14 and stitching trajectory 16, and is translated parallel to plane P1 to move contact point 15 along stitching trajectory 16 as application point 10 moves along application trajectory 11.

In other words, as axis 19 translates, any point C along axis 19 moves in a plane P3 parallel to plane P1 and intersecting surface 4.

Plane P3 being merely parallel to plane P1 allows the designer absolute freedom of choice by enabling location of stitching unit 18 in any number of positions with respect to spindle 2 and forming unit 8, with no interference between application trajectory 11 and stitching trajectory 16.

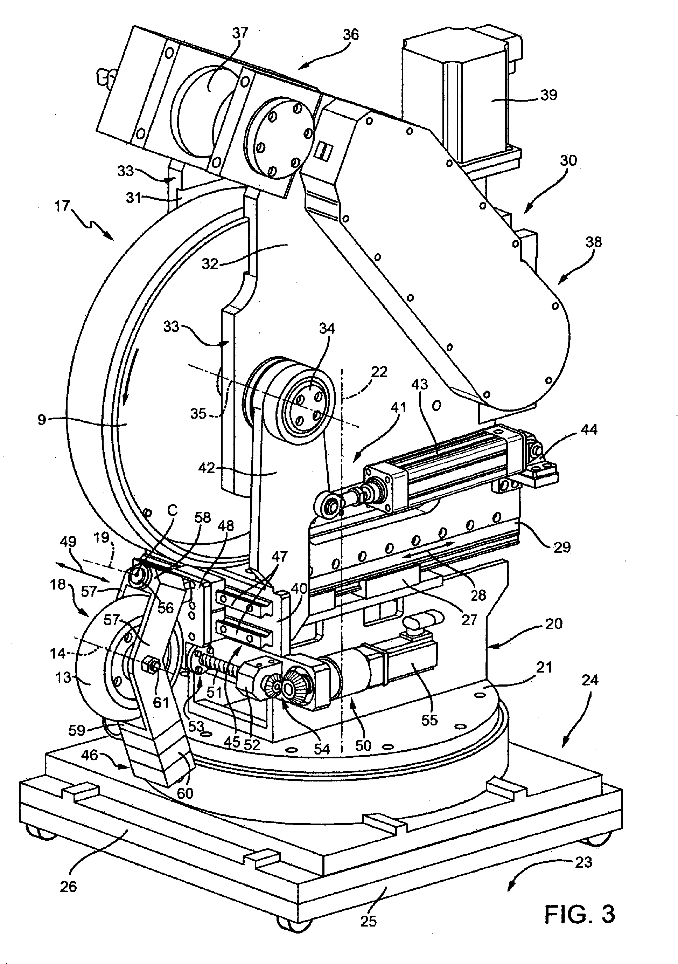

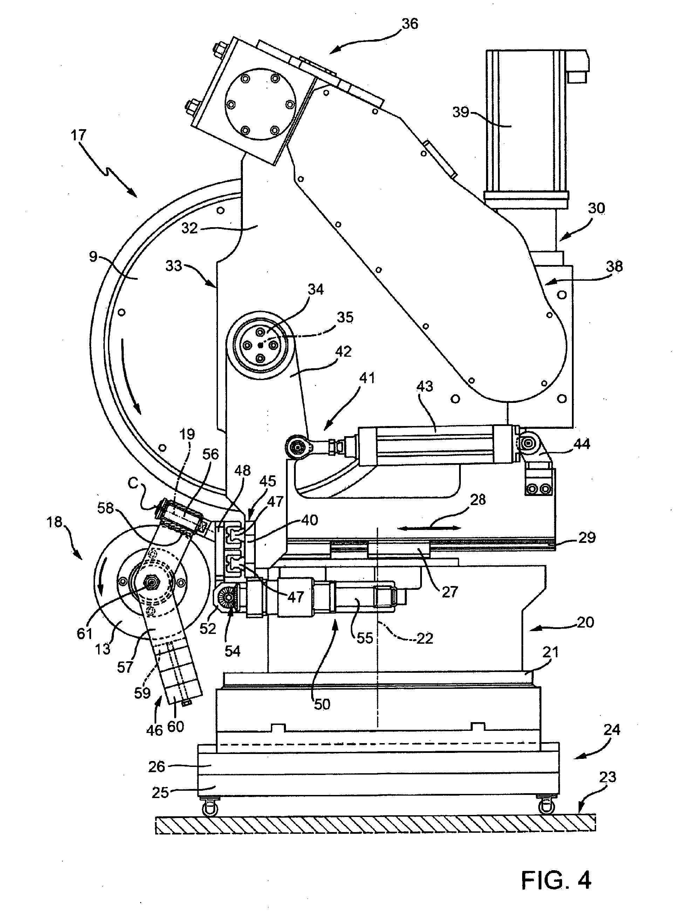

Planes P1 and P3 being parallel, spindle 2, forming unit 8 and stitching unit 18 can be incorporated in profiling unit 17, which is a perfected profiling unit as shown in Figures 3 to 6.

With reference to Figures 3 to 6, profiling unit 17 comprises a bed 20 mounted on a pivot 21 powered to rotate bed 20 about an axis 22. Pivot 21 is mounted movably on a supporting surface 23, which is parallel to plane P1, is substantially horizontal in the example shown (but may slope slightly), and may be defined, for example, by the floor. Pivot 21 is movable on supporting surface 23 by a known system 24 comprising a carriage 25 on supporting surface 23; and a known assembly 26 allowing pivot 21 to move crosswise to axis 22 in two directions perpendicular to each other and to axis 22, and parallel to supporting surface 23.

The top end of bed 20 is fitted with a guide 27, which extends in a horizontal direction 28 diametrical with respect to pivot 21 and axis 22, and is fitted with a powered bottom slide 29 of an operating head 30 housing forming unit 8 and profiling unit 17.

Operating head 30 comprises two parallel, opposite vertical plates 31, 32, which are parallel to direction 28, extend upwards from slide 29, and are connected to each other, close to their front edges 33, by a horizontal pin 34 having an axis 35 perpendicular to plates 31, 32 and crosswise to direction 28. Applicator roller 9 is mounted idly on pin 34, is located between plates 31 and 32, projects partly frontwards from front edges 33, and is designed to receive a strip 7 of elastomeric material, as shown in Figure 2, from a calender 36 of forming unit 8 mounted between plates 31 and 32, and to deposit strip 7 onto surface 4 of toroidal support 1 mounted on spindle 2 and rotated by a motor (not shown) about horizontal axis 3 parallel to axis 35.

As shown in Figures 3 to 5, calender 36 is positioned directly over applicator roller 9, and comprises, in known manner, two rollers 37 (only one shown) defining a contoured passage for strip 7 (Figure 2), and one of which is driven, via a drive chain 38, by a motor 39 fitted to the rear of operating head 30.

To the front of the front end of guide 27, profiling unit 17 comprises a plate 40, which is normally in a vertical position perpendicular to direction 28, and forms part of a thrust device 41 of stitching unit 18.

Thrust device 41 comprises a lever 42 located on the outside of plate 32, hinged at its top end to pin 34 to oscillate about axis 35, and fitted on its bottom end with plate 40; and an air-powered jack 43 substantially parallel to direction 28, and which is hinged at its front end to an intermediate point of lever 42, and at its rear end to a bracket 44 fitted to the rear of operating head 30.

Stitching unit 18 comprises a horizontal slide assembly 45 for a bracket 46 supporting pressure roller 13. More specifically, slide assembly 45 comprises two horizontal guides 47 parallel to axis 35, integral with plate 40, and fitted one above the other to a front surface of plate 40; a slide 48 mounted to slide along guides 47 in a horizontal direction 49 crosswise to direction 28 and parallel to axis 35; and an actuating device 50 comprising a screw 51 parallel to guides 47 and fitted in rotary manner to plate 40, beneath guides 47, by two brackets 52. Screw 51 is fitted to a bottom appendix of slide 48 by a screw-nut screw coupling 53, and is connected by a bevel gear coupling 54 to the output shaft of a motor 55 fitted to plate 40 and substantially parallel to direction 28.

The top end of slide 48 is fitted with a pin 56, which idly supports bracket 46, lies in a vertical plane perpendicular to the plane of plate 40, and has an axis 19 preferably (as in the example shown) but not necessarily sloping upwards, and the point C of which is indicated by way of example at the top end of pin 56.

Bracket 46, viewed from the side, is substantially V-shaped, and, viewed from the front, is annular and defined by two side by side arms 57 connected to each other by a top cross member 58 and a bottom cross member 59.

Top cross member 58 has a through hole parallel to the plane of arms 57 and engaged in rotary manner by pin 56; and bottom cross member 59 is fitted with a counterweight 60 projecting downwards from bracket 46. Arms 57 define a double supporting fork by means of a pin 61 crosswise to pin 56 and coaxial with axis 14 of pressure roller 13, which projects frontwards from bracket 46 and oscillates idly about axis 19 of pin 56.

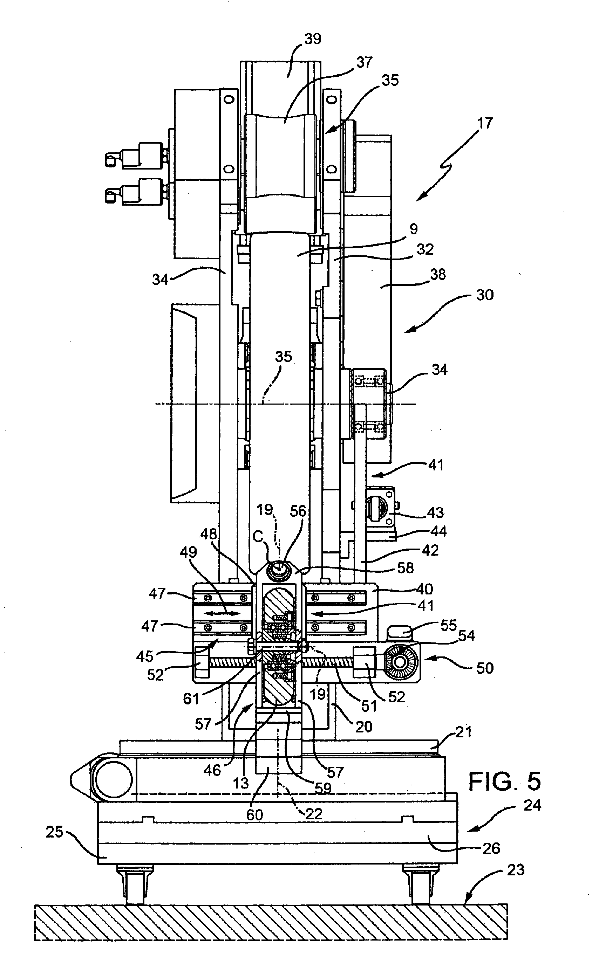

In other words, pressure roller 13 of stitching unit 18 is movable by slide 48, in direction 49, beneath and from one side to the other of applicator roller 9; is suspended by bracket 46 from pin 56 to oscillate about axis 19; rotates about the axis of pin 61 with respect to bracket 46; and is normally maintained by counterweight 60 in the vertical position shown in Figure 5.

In actual use, to deposit strip 7 of green elastomeric material to gradually form a layer (not shown) covering cylindrical lateral portion 5 of support 1, machine A is set up alongside support 1, with axis 35 parallel to axis 3, with the periphery of applicator roller 9 contacting cylindrical lateral portion 5 at an application point 10 located in a plane P1 which, in the example shown, is a horizontal radial plane, and with pressure roller 13 centred beneath applicator roller 9 and pushed by thrust device 41 into contact with support 1 at a point 15 on surface S, which is located beneath and a given mean distance from plane P1. In this position, point C of axis 19 is located in plane P3 parallel to plane P1 and in an intermediate position between surface S and plane P1.

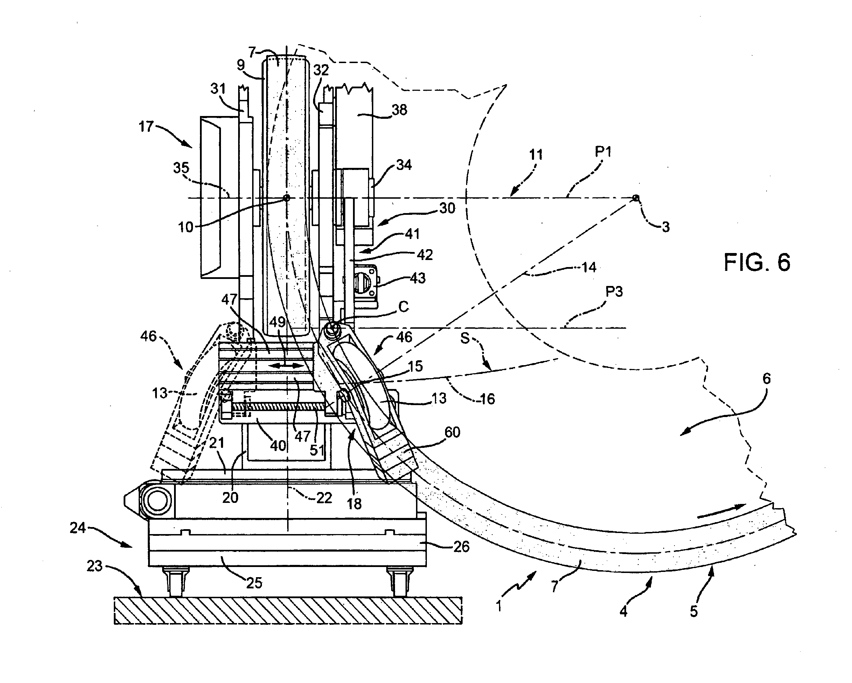

When forming the layer (not shown), support 1 is rotated clockwise, in Figure 6, about axis 3, and rotates both applicator roller 9 and pressure roller 13, which remains substantially centred along slide assembly 45. In this condition, stitching unit 18 rolls the deposited strip 7, keeping pressure roller 13 in a substantially vertical position, with pin 61 substantially parallel to pin 34, and moving points 10 and 15 simultaneously along respective trajectories 11 and 16 in plane P1 and on surface S respectively, by moving profiling unit 17 in a direction substantially parallel to axis 3.

To gradually cover a lateral end portion 6 of support 1 with a strip 7 of green elastomeric material to form a sidewall 62, as shown in Figure 6, machine A is moved on supporting surface 23 into a position facing lateral end portion 6, with its axis 35 perpendicular to axis 3, and with applicator roller 9 contacting support 1 at a point 10 in plane P1; bracket 46 is moved along slide assembly 45 to position pressure roller 13, still vertical, facing part of lateral end portion 6; and pressure roller 13, still vertical, is pressed by thrust device 41 onto support 1 at a point 15, on lateral end portion 6, located on surface S. Throughout these movements, point C moves in its fixed plane P3.

When support 1 is rotated clockwise, in Figure 6, about axis 3, and machine A is moved along supporting surface 23 in a direction crosswise to axis 3, points 10 and 15 move along respective trajectories 11 and 16, and point C moves along plane P3 to gradually form sidewall 62 and stitch the deposited strip 7.

In connection with the above, it should be noted that, given its initial vertical position, pressure roller 13, when it begins stitching on lateral end portion 6, is subjected to transverse forces, which lift it about axis 19 into a plane whose tilt angle, like that of speed vector V2, varies with the position of point 15 along trajectory 16, thus enabling pressure roller 13 to stitch the deposited strip 7 correctly, with a practically zero skid angle along path P, which in this case is spiral-shaped.

In connection with the above, it should be noted that the tilted position described is a position of stable dynamic equilibrium, in that downward rotation of bracket 46, about axis 19 and with respect to the tilted position, results immediately in the onset, between pressure roller 13 and lateral end portion 6, of forces directed axially with respect to pressure roller 13, and which restore pressure roller 13 to the stable tilted position. And, conversely, upward rotation of bracket 46, about axis 19 and with respect to the tilted position, produces a corresponding increase in the moment generated by counterweight 60 about axis 19, to restore bracket 46 to the stable tilted position.

It should be noted that, regardless of the surface for covering, slide assembly 45 can be adjusted slightly to position pressure roller 13 at either one of the lateral edges of the deposited strip 7.

Moreover, the fact that pressure roller 13 moves towards support 1 along a circular trajectory coaxial with axis 35 enables contact point 15 between pressure roller 13 and support 1 to be kept as close as possible to contact point 10 between applicator roller 9 and support 1, i.e. the point at which strip 7 is deposited.

Finally, it is important to note that, if surface S contained axis 3, it would be impossible for a profiling machine with a built-in stitching unit, such as profiling unit 17, to operate correctly.

## Claims

1. A method of producing a tyre component part, the method comprising forming said component part by gradually covering a surface (4) of a support (1) with a strip (7) of green elastomeric material, and stitching the strip (7) against the surface (4) for covering, as the strip (7) is applied to the surface (4) for covering; the support (1) having an axis (3); the surface (4) for covering comprising at least one annular portion (6) extending crosswise to the axis (3) of the support (1); and the method comprising the steps of :
- rotating the support (1) about its axis (3) in a given rotation direction;
- providing an applicator roller (9) which rotates about a first axis (35);
- positioning the applicator roller (9) contacting said surface (4) at an application point (10), to apply the strip (7) to said surface (4) along a given path (P);
- associating the applicator roller (9) with a pressure roller (13) mounted to rotate about a second axis (14), free to oscillate about a third axis (19) crosswise to the first and second axis (35, 14), and movable with the applicator roller (9) along said path (P) :
- positioning the pressure roller (13) contacting said surface (4) at a contact point (15) located along said path (P), at a given distance from the application point (10), and downstream from the application point (10) in said rotation direction; and
- simultaneously moving the application point (10) along an application trajectory (11), and the contact point (15) along a stitching trajectory (16) crosswise to said path (P), so the application and contact points (10, 15) sweep the whole of said surface (4) as the support (1) rotates about its axis (3); both said trajectories (11, 16) comprising respective portions extending along said annular portion (6); the application trajectory (11) being defined by the intersection of said surface (4) and a radial plane (P1) of the support (1); and the movement of the contact point (15) along the portion of the stitching trajectory (16) extending along the annular portion (6) corresponding to translation of the third axis (19) in a direction parallel to said radial plane (P1) and crosswise to the axis (3) of the support (1).

2. A method as claimed in Claim 1, wherein the application and contact points (10, 15) are moved simultaneously along the application trajectory (11) and stitching trajectory (16) respectively, by :
- providing a profiling unit (17) comprising forming means (8) in turn comprising the applicator roller (9); stitching means (18) in turn comprising the pressure roller (13) and located beneath the forming means (8); displacement means (24) mounted to move along a supporting surface (23) parallel to said radial plane (P1), and which support the forming and stitching means (8, 18); and adjusting means (41-55) connected to the pressure roller (13) to position the contact point (15) along said path (P) and downstream from the application point (10) in said rotation direction; and
- operating the displacement means (24) to move the profiling unit (17) along the supporting surface (23).

3. A method as claimed in Claim 1 or 2, wherein the radial plane (P1) and the supporting surface (23) are horizontal.

4. A machine for producing a tyre component part, the machine (A) comprising a support (1) having an axis (3) and a surface (4) comprising at least one annular portion (6) extending crosswise to said axis (3) and which is covered gradually with a strip (7) of green elastomeric material to form the component part; a spindle (2) for rotating the support (1) in a given direction about its axis (3); and a profiling unit (17); the profiling unit (17) comprising forming means (8) for forming said strip (7), and in turn comprising an applicator roller (9) which rotates about a first axis (35) to apply the strip (7) to said surface (4) and along a given path (P) extending along the surface (4); stitching means (18), in turn comprising a pressure roller (13) for stitching the applied strip (7) on said surface (4); and displacement means (24) for moving the profiling unit (17) with respect to the spindle (2), so as to position the applicator roller (9) and the pressure roller (13) contacting said surface (4) at an application point (10) and a stitch contact point (15) respectively, and to move the application point (10), with respect to the spindle (2), along an application trajectory (11) lying in a radial plane (P1) with respect to the spindle (2), and simultaneously move the contact point (15) along a stitching trajectory (16) substantially parallel to the application trajectory (11) and located a given distance from the application trajectory (11), so the application and contact points (10, 15) sweep the whole of said surface (4) as the spindle (2) rotates about its axis (3); the stitching means (18) comprising supporting means (46, 61) for supporting and allowing the pressure roller (13) to rotate about a second axis (14) and to oscillate about a third axis (19) crosswise to the first and second axis (35, 14); and the supporting means (46, 61) being connected to the forming means (8) so that movement of the contact point (15) along the portion of the stitching trajectory (16) extending along the annular portion (6) corresponds to translation of the third axis (19) in a direction parallel to said radial plane (P1) and crosswise to the axis (3) of the support (1).

5. A machine as claimed in Claim 4, wherein the radial plane (P1) is horizontal.

6. A machine as claimed in Claim 4 or 5, wherein thrust means (41) are connected to the supporting means (46, 61) to push the pressure roller (13) towards the spindle (2), and to move the pressure roller (13) into contact with said surface (4) at the contact point (15).

7. A machine as claimed in Claim 6, wherein the supporting means (46, 61) comprise a bracket (46) connected to the thrust means (41) to oscillate, with respect to the thrust means (41), about the third axis (19).

8. A machine as claimed in Claim 6 or 7, wherein the thrust means (41) comprise a slide assembly (45), in turn comprising a plate (40) movable to and from said surface (4), a slide (48) fitted in sliding manner to the plate (40), and actuating means (50) for moving the slide (48) along the plate (40) in a direction crosswise to the third axis (19); the bracket (46) being connected to the slide (48) to oscillate, with respect to the slide (48), about the third axis (19).

9. A machine as claimed in Claim 8, wherein the third axis (19) slopes upwards with respect to and from the plate (40).

10. A machine as claimed in one of Claims 7 to 9, wherein the bracket (46) is annular, and comprises two side by side arms (57) connected to each other by a first and second cross member (58, 59), and defining a fork supporting the pressure roller (13).

11. A machine as claimed in Claim 10, wherein the first and second cross member (58, 59) are located on opposite sides of the second axis (14); and the first cross member (58) is located above the second cross member (59), and has a through hole coaxial with the third axis (19) and engaged in rotary manner by a pin (56) integral with the slide (48).

12. A machine as claimed in Claim 11, and comprising a counterweight (60) connected integrally to the second cross member (59).

13. A machine as claimed in one of Claims 6 to 12, wherein the thrust means (41) comprise a lever (42) hinged to oscillate about the first axis (35), and fitted on its free end with the pressure roller (13).

14. A machine as claimed in Claim 13, wherein the thrust means (41) also comprise actuating means (50), which operate in a direction (28) crosswise to the first axis (35), and are connected to an intermediate point of said lever (42) to move the pressure roller (13) along a circular trajectory coaxial with the first axis (35).

## Patentansprüche

1. Verfahren zur Herstellung eines Reifenkomponententeils, wobei das Verfahren das Bilden des Komponententeils durch graduelles Bedecken einer Oberfläche (49) einer Halterung (1) mit einem Streifen (7) grünen elastomeren Materials, und das Annähen des Streifens (7) an der Oberfläche (4) zum Bedecken, wenn der Streifen (7) auf der Oberfläche (4) zum Bedecken aufgetragen wird, umfasst; wobei die Halterung (1) eine Achse (3) aufweist; wobei die Oberfläche (4) zum Bedecken mindestens einen ringförmigen Abschnitt (6) umfasst, der sich quer zu der Achse (3) der Halterung (1) erstreckt; und wobei das Verfahren die folgenden Schritte umfasst:
- Drehen der Halterung (1) um ihre Achse (3) in einer gegebenen Drehrichtung;
- Bereitstellen einer Auftragewalze (9), die sich um eine erste Achse (35) dreht;
- Positionieren der Auftragewalze (9), so dass sie mit der Oberfläche (4) an einem Auftragungspunkt (10) in Kontakt ist, um den Streifen (7) an der Oberfläche (4) entlang einem gegebenen Pfad (P) aufzutragen;
- Zuweisen der Auftragewalze (9) zu einer Andruckwalze (13), die gelagert ist, um sich um eine zweite Achse (14) zu drehen, frei ist, um eine dritte Achse (19) quer zu der ersten und zweiten Achse (35, 14) zu schwingen, und mit der Auftragewalze (9) beweglich entlang dem Pfad (P) ist;
- Positionieren der Andruckwalze (13), so dass sie mit der Oberfläche (4) an einem Kontaktpunkt (15) in Kontakt ist, der sich entlang dem Pfad (P) befindet, mit einem gegebenen Abstand zu dem Auftragungspunkt (10) und in der Drehrichtung hinter dem Auftragungspunkt (10); und
- gleichzeitiges Bewegen des Auftragungspunkts (10) entlang einer Auftragungsbahn (11) und des Kontaktpunkts (15) entlang einer Annähbahn (16) quer zu dem Pfad (P), so dass die Auftragungs- und Kontaktpunkte (10, 15) über die Gesamtheit der Oberfläche (4) streichen, wenn sich die Halterung (1) um ihre Achse (3) dreht; wobei beide Bahnen (11, 16) entsprechende Abschnitte umfassen, die sich entlang dem ringförmigen Abschnitt (6) erstrecken; wobei die Auftragungsbahn (11) von der Kreuzung der Oberfläche (4) und einer Radialebene (P1) der Halterung bestimmt ist; und die Bewegung des Kontaktpunkts (15) entlang dem Abschnitt der Annähbahn (16) sich entlang dem ringförmigen Abschnitt (6) erstreckt, der der Übersetzung der dritten Achse (19) in einer Richtung parallel zu der Radialebene (P1) und quer zur Achse (3) der Halterung (1) entspricht.

2. Verfahren nach Anspruch 1, wobei die Auftragungs- und Kontaktpunkte (10, 15) gleichzeitig jeweils entlang der Auftragungsbahn (11) beziehungsweise der Annähbahn (16) bewegt werden, durch:
- Bereitstellen einer Profilierungseinheit (17) umfassend Bildemittel (8), die wiederum die Auftragewalze (9) umfassen; Annähmittel (18), die wiederum die Andruckwalze (13) umfassen und sich unter den Bildemitteln (8) befinden; Verschiebemittel (24), die gelagert sind, um sich entlang einer stützenden Oberfläche (23) parallel zur Radialebene (P1) zu bewegen und die die Bilde- und Annähmittel (8, 18) stützen; und Einstellmittel (41-55), die mit der Andruckwalze (13) verbunden sind, um den Kontaktpunkt (15) entlang dem Pfad (P) und in der Drehrichtung hinter dem Auftragungspunkt (10) zu positionieren; und
- Betreiben der Verschiebemittel (24), um die Profilierungseinheit (17) entlang der stützenden Oberfläche (23) zu bewegen.

3. Verfahren nach Anspruch 1 oder 2, wobei die Radialebene (P1) und die stützende Oberfläche (23) waagerecht sind.

4. Maschine zum Herstellen eines Reifenkomponententeils, wobei die Maschine (A) umfasst: eine Halterung (1), die eine Achse (3) und eine Oberfläche (4) aufweist, die mindestens einen ringförmigen Abschnitt (6) umfasst, der sich quer zu der Achse (3) erstreckt und der graduell mit einem Streifen (7) grünen elastomeren Material bedeckt wird, um das Komponententeil zu bilden; eine Spindel (2) zum Drehen der Halterung (1) in einer gegebenen Richtung um ihre Achse (3); und eine Profilierungseinheit (17); wobei die Profilierungseinheit (17) umfasst: Bildemittel (8) zum Bilden des Streifens (7), die wiederum eine Auftragewalze (9) umfassen, die sich um eine erste Achse (35) dreht, um den Streifen (7) auf der Oberfläche (4) und entlang einem gegebenen Pfad (P), der sich entlang der Oberfläche (4) erstreckt, aufzutragen; Annähmittel (18) zum Annähen des aufgetragenen Streifens (7) auf der Oberfläche (4); und Verschiebemittel (24) zum Bewegen der Profilierungseinheit (17) in Bezug auf die Spindel (2), um die Auftragewalze (9) und die Andruckwalze (13) so zu positionieren, dass sie mit der Oberfläche (4) an jeweils einem Auftragungspunkt (10) und einem Annähkontaktpunkt (15) in Kontakt sind, und um den Auftragungspunkt (10) in Bezug auf die Spindel (2) entlang einer Auftragungsbahn (11) zu verschieben, die in einer Radialebene (P1) in Bezug auf die Spindel liegt, und um gleichzeitig den Kontaktpunkt (15) entlang einer Annähbahn (16) zu bewegen, die im Wesentlichen parallel zur Auftragungsbahn (11) ist und sich in einem gegebenen Abstand zu der Auftragungsbahn (11) befindet, so dass die Auftragungs- und Kontakpunkte (10, 15) die Gesamtheit der Oberfläche (4) streichen, wenn die Spindel (2) sich um ihre Achse (3) dreht; wobei die Annähmittel (18) Stützmittel (46, 61) zum Stützen und zum Ermöglichen aufweisen, dass die Andruckwalze (13) sich um eine zweite Achse (14) dreht und um eine dritte Achse (19) schwingt, die quer zur ersten und zweiten Achse (35, 14) ist; und wobei die Stützmittel (46, 61) mit den Bildemitteln (8) verbunden sind, so dass eine Bewegung des Kontaktpunkts (15) entlang dem Abschnitt der Annähbahn (16), der sich entlang dem ringförmigen Abschnitt (6) erstreckt, der Übersetzung der dritten Achse (19) in einer Richtung parallel zur Radialebene (P1) und quer zur Achse (3) der Halterung (1) entspricht.

5. Maschine nach Anspruch 4, wobei die Radialebene (P1) waagerecht ist.

6. Maschine nach Anspruch 4 oder 5, wobei Stoßmittel (41) mit den Stützmitteln (46, 61) verbunden sind, um die Andruckwalze (13) hin zu der Spindel (2) zu drücken, und um die Andruckwalze (13) in Kontakt mit der Oberfläche am Kontaktpunkt (15) zu bewegen.

7. Maschine nach Anspruch 6, wobei die Stützmittel (46, 61) einen Träger (46) umfassen, der mit den Stoßmitteln (41) verbunden ist, um in Bezug auf die Stoßmittel (41) um die dritte Achse (19) zu schwingen.

8. Maschine nach Anspruch 6 oder 7, wobei die Stoßmittel eine Gleitbaugruppe (45) umfassen, die wiederum ein Platte (40), die zu der Oberfläche (4) und von ihr weg bewegbar ist, einen Schlitten (48), der gleitend an der Platte (40) angebracht ist, und Betätigungsmittel (50) umfasst, um den Schlitten (48) entlang der Platte (40) in einer Richtung quer zur dritten Achse (19) zu bewegen; wobei der Träger (46) mit dem Schlitten (48) verbunden ist, um in Bezug auf den Schlitten (48) um die dritte Achse (19) zu schwingen.

9. Maschine nach Anspruch 8, wobei die dritte Achse (19) in Bezug auf und von der Platte (40) schräg nach oben verläuft.

10. Maschine nach Anspruch 7 bis 9, wobei der Träger (46) ringförmig ist und zwei nebeneinander befindliche Arme (57) umfasst, die durch einen ersten und zweiten Querträger (58, 59) miteinander verbunden sind und die eine Gabel bilden, die die Andruckwalze (13) stützt.

11. Maschine nach Anspruch 10, wobei sich der erste und zweite Querträger (58, 59) auf gegenüberliegenden Seiten der zweiten Achse (14) befinden; und der erste Querträger (58) sich über dem zweiten Querträger (59) befindet und ein Durchgangsloch aufweist, das koaxial zu der dritten Achse (19) ist und in das ein Stift (56) drehend eingreift, der mit dem Schlitten eine Einheit bildet (48).

12. Maschine nach Anspruch 11, umfassend ein Gegengewicht (60), das einstückig mit dem zweiten Querträger (59) verbunden ist.

13. Maschine nach einem der Ansprüche 6 bis 12, wobei die Stoßmittel (41) einen Hebel (42) umfassen, der drehbar gelagert ist, um um eine erste Achse (35) zu schwingen, und an seinem freien Ende mit der Andruckwalze (13) ausgestattet ist.

14. Maschine nach Anspruch 13, wobei die Stoßmittel (41) auch Betätigungsmittel (50) umfassen, die in einer Richtung (28) quer zur ersten Achse (35) funktionieren und die mit einem Zwischenpunkt des Hebels (42) verbunden sind, um die Andruckwalze (13) entlang einer kreisförmigen Bahn koaxial zu der ersten Achse (35) zu bewegen.

## Revendications

1. Procédé de production d'un élément de pneu, le procédé comprenant la formation dudit élément en recouvrant graduellement une surface (4) d'un support (1) avec une bande (7) de matériau élastomère vert, et en cousant la bande (7) contre la surface (4) à couvrir, lorsque la bande (7) est appliquée sur la surface (4) à couvrir; le support (1) présentant un axe (3); la surface (4) à couvrir comprenant au moins une partie annulaire (6) qui s'étend perpendiculairement à l'axe (3) du support (1); et le procédé comprenant les étapes suivantes :
- faire tourner le support (1) autour de son axe (3) dans un sens de rotation donné ;
- prévoir un rouleau applicateur (9) qui tourne autour d'un premier axe (35) ;
- positionner le rouleau applicateur (9) en contact avec ladite surface (4) en un point d'application (10), pour appliquer la bande (7) sur ladite surface (4) le long d'un chemin donné (P) ;
- associer le rouleau applicateur (9) à un rouleau de pression (13) monté de façon à tourner autour d'un deuxième axe (14), libre d'osciller autour d'un troisième axe (19) perpendiculaire au premier et au deuxième axes (35, 14), et mobile avec le rouleau applicateur (9) le long dudit chemin (P) ;
- positionner le rouleau de pression (13) en contact avec ladite surface (4) en un point de contact (15) situé le long dudit chemin (P), à une distance donnée du point d'application (10), et en aval du point d'application (10) dans ledit sens de rotation ; et
- déplacer simultanément le point d'application (10) le long d'une trajectoire d'application (11) et le point de contact (15) le long d'une trajectoire de couture (16) perpendiculaire audit chemin (P), de telle manière que le point d'application et le point de contact (10, 15) balaient la totalité de ladite surface (4) lorsque le support (1) tourne autour de son axe (3); lesdites deux trajectoires (11, 16) comportant des parties respectives qui s'étendent le long de ladite partie annulaire (6); la trajectoire d'application (11) étant définie par l'intersection de ladite surface (4) et d'un plan radial (P1) du support (1); et le mouvement du point de contact (15) le long de la partie de la trajectoire de couture (16) qui s'étend la long de la partie annulaire (6) correspondant à une translation du troisième axe (19) dans une direction parallèle audit plan radial (P1) et perpendiculaire à l'axe (3) du support (1).

2. Procédé selon la revendication 1, dans lequel les points d'application et de contact (10, 15) sont déplacés simultanément le long de la trajectoire d'application (11) et de la trajectoire de couture (16) respectivement, en :
- prévoyant une unité de profilage (17) qui comprend des moyens de formage (8) comprenant à leur tour le rouleau applicateur (9); des moyens de couture (18) comprenant à leur tour le rouleau de pression (13) et situés en dessous des moyens de formage (8); des moyens de déplacement (24) montés de façon à se déplacer le long d'une surface de support (23) parallèle audit plan radial (P1), et qui supportent les moyens de formage et de couture (8, 18); et des moyens de réglage (41-55) connectés au rouleau de pression (13) afin de positionner le point de contact (15) le long dudit chemin (P) et en aval du point d'application (10) dans ledit sens de rotation ; et
- activer les moyens de déplacement (24) afin de déplacer l'unité de profilage (17) le long de la surface de support (23).

3. Procédé selon la revendication 1 ou 2, dans lequel le plan radial (P1) et la surface de support (23) sont horizontales.

4. Machine de production d'un élément de pneu, la machine (A) comprenant un support (1) présentant un axe (3) et une surface (4) comportant au moins une partie annulaire (6) qui s'étend perpendiculairement audit axe (3) et qui est recouverte graduellement avec une bande (7) de matériau élastomère vert afin de former l'élément; une broche (2) pour faire tourner le support (1) dans un sens donné autour de son axe (3); et une unité de profilage (17); l'unité de profilage (17) comprenant des moyens de formage (8) pour former ladite bande (7), et comprenant à leur tour un rouleau applicateur (9) qui tourne autour d'un premier axe (35) afin d'appliquer la bande (7) sur ladite surface (4) et le long d'un chemin donné (P) qui s'étend le long de la surface (4); des moyens de couture (18), comprenant à leur tour un rouleau de pression (13) pour coudre la bande appliquée (7) sur ladite surface (4); et des moyens de déplacement (24) pour déplacer l'unité de profilage (17) par rapport à la broche (2), de façon à positionner le rouleau applicateur (9) et le rouleau de pression (13) en contact avec ladite surface (4) en un point d'application (10) et un point de contact de couture (15) respectivement, et à déplacer le point d'application (10), par rapport à la broche (2), le long d'une trajectoire d'application (11) située dans un plan radial (P1) par rapport à la broche (2), et en même temps à déplacer le point de contact (15) le long d'une trajectoire de couture (16) sensiblement parallèle à la trajectoire d'application (11) et située à une distance donnée de la trajectoire d'application (11), de telle manière que les points d'application et de contact (10, 15) balaient la totalité de ladite surface (4) lorsque la broche (2) tourne autour de son axe (3); les moyens de couture (18) comprenant des moyens de support (46, 61) pour supporter et permettre au rouleau de pression (13) de tourner autour d'un deuxième axe (14) et d'osciller autour d'un troisième axe (19) perpendiculaire au premier et au deuxième axes (35, 14); et les moyens de support (46, 61) étant connectés aux moyens de formage (8) de telle manière qu'un mouvement du point de contact (15) le long de la partie de la trajectoire de couture (16) s'étendant le long de la partie annulaire (6) corresponde à une translation du troisième axe (19) dans une direction parallèle audit plan radial (P1) et perpendiculaire à l'axe (3) du support (1).

5. Machine selon la revendication 4, dans laquelle le plan radial (P1) est horizontal.

6. Machine selon la revendication 4 ou 5, dans laquelle des moyens de poussée (41) sont connectés aux moyens de support (46, 61) afin de pousser le rouleau de pression (13) en direction de la broche (2) et de déplacer le rouleau de pression (13) en contact avec ladite surface (4) au point de contact (15).

7. Machine selon la revendication 6, dans laquelle les moyens de support (46, 61) comprennent un étrier (46) connecté aux moyens de poussée (41) afin d'osciller, par rapport aux moyens de poussée (41), autour du troisième axe (19).

8. Machine selon la revendication 6 ou 7, dans laquelle les moyens de poussée (41) comprennent un ensemble de coulisseau (45), comportant à son tour une plaque (40) mobile vers ladite surface (4) et inversement, un coulisseau (48) agencé de manière coulissante sur la plaque (40), et des moyens d'actionnement (50) pour déplacer le coulisseau (48) le long de la plaque (40) dans une direction perpendiculaire au troisième axe (19); le support (46) étant connecté au coulisseau (48) afin d'osciller, par rapport au coulisseau (48), autour du troisième axe (19).

9. Machine selon la revendication 8, dans laquelle le troisième axe (19) est incliné vers le haut par rapport à et à partir de la plaque (40).

10. Machine selon l'une quelconque des revendications 7 à 9, dans laquelle le support (46) est annulaire, et comprend deux bras côte à côte (57) connectés l'un à l'autre par un premier et un deuxième éléments transversaux (58, 59), et définissant une fourche qui supporte le rouleau de pression (13).

11. Machine selon la revendication 10, dans laquelle le premier et le deuxième éléments transversaux (58, 59) sont situés sur des côtés opposés du deuxième axe (14); et le premier élément transversal (58) est situé au-dessus du deuxième élément transversal (59), et présente un trou de passage coaxial au troisième axe (19) et traversé de façon rotative par une broche (56) intégrée dans le coulisseau (48).

12. Machine selon la revendication 11, et comprenant un contrepoids (60) connecté de manière intégrée au deuxième élément transversal (59).

13. Machine selon l'une quelconque des revendications 6 à 12, dans laquelle les moyens de poussée (41) comprennent un levier (42) articulé de façon à osciller autour du premier axe (35), et muni à son extrémité libre du rouleau de pression (13).

14. Machine selon la revendication 13, dans laquelle les moyens de poussée (41) comprennent également des moyens d'actionnement (50), qui agissent dans une direction (28) perpendiculaire au premier axe (35), et qui sont connectés à un point intermédiaire dudit levier (42) afin de déplacer le rouleau de pression (13) le long d'une trajectoire circulaire coaxiale au premier axe (35).
